Europäisches Patentamt

European Patent Office

Office européen des brevets

(19)

(11) Veröffentlichungsnummer : **0 039 506**
**B1**

(12) **EUROPÄISCHE PATENTSCHRIFT**

(45) Veröffentlichungstag der Patentschrift :
28.11.84

(21) Anmeldenummer : 81103374.5

(22) Anmeldetag : 05.05.81

(51) Int. Cl.³ : **H 02 G 11/02, B 66 C 13/12**

(54) **Vorrichtung zum Anschluss eines verfahrbaren Energieverbrauchers an eine stationäre Energiequelle.**

(30) Priorität : 06.05.80 DE 3017233

(43) Veröffentlichungstag der Anmeldung :
11.11.81 Patentblatt 81/45

(45) Bekanntmachung des Hinweises auf die Patenterteilung : 28.11.84 Patentblatt 84/48

(84) Benannte Vertragsstaaten :
BE DE GB

(56) Entgegenhaltungen :
DE-A- 2 338 289
DE-C- 690 601
DE-C- 711 320
DE-C- 862 826
GB-A- 714 492
GB-A- 775 392

(73) Patentinhaber : Muckenhaupt GmbH & Co. KG Ma-
schinen- und Werkzeugbau
Bredenscheider Strasse 183
D-4320 Hattingen-Bredenscheid (DE)

(72) Erfinder : Winkelhardt, Peter
Schumannstrasse 4
D-4320 Hattingen (DE)
Erfinder : Morgenstern, Günther
Karl-Strasse 4
D-4320 Hattingen (DE)

(74) Vertreter : Bode, Hans
Patentanwalt Bode, Hans, Dipl.-Ing. Postfach 1130
Weidtmannweg 5-9
D-4030 Ratingen 1 (DE)

Jouve, 18, rue St-Denis, 75001 Paris, France

**Beschreibung**

Die Erfindung betrifft eine Vorrichtung zum Anschluß eines verfahrbaren Energieverbrauchers an eine stationäre Energiequelle nach dem ersten Teil des Anspruches 1.

Eine solche Vorrichtung ist aus der DE-A-23 38 289 bei einer auf dem Erdboden fahrenden, also nicht schienengebundenen Erdbewegungsmaschine bekannt, die elektrisch betrieben und über ein Kabel mit einer stationären Energiequelle verbunden ist. An dieser Erdbewegungsmaschine ist eine Trommel angeordnet, die einen Antrieb aufweist und zum Aufwickeln der Leitung dient. Neben der Trommel ist eine Spindel angeordnet, deren Antrieb von der Trommelbewegung abgeleitet ist und die eine in Trommellängsrichtung verschiebliche Leitungsführung mit einem Einführungstrichter für die Leitung bewegt, so daß das Kabel auf der Trommel in einer geordneten Lage aufgewickelt wird. Hierdurch wird verhindert, daß das auf dem Erdboden liegende Kabel etwa von der Erdbewegungsmaschine überfahren werden könnte.

Aus der GB-A-714 492 ist eine Vorrichtung zum Anschluß von Energieverbrauchern, die längs des Gleises einer Standbahn verfahrbar sind, an eine stationäre Energiequelle mittels einer an die Energiequelle angeschlossenen beweglichen Leitung bekannt, die eine am Gleis verfahrbare, mit dem Energieverbraucher verbundene Trommel mit einem Antrieb zum Aufwickeln der Leitung aufweist. Auch in diesem Falle liegt die Leitung auf dem Boden oder sie würde, selbst wenn sich ihr Anschlußpunkt an die stationäre Energiequelle und ihr Aufwickelpunkt an der Trommel oberhalb des Bodens befinden würden, doch bis zum Boden durchhängen.

In untertägigen Grubenbetrieben stellen stromführende Leitungen und Kabel, die ungeschützt und gegebenenfalls ungeordnet auf dem Liegenden verlaufen, eine erhebliche Gefahrenquelle dar. Durch die zahlreichen Gegenstände, die auf dem Liegenden einer Strecke im untertätigen Bergbau bewegt werden, oder auch durch Steinfall, können diese Leitungen beschädigt werden, sei es durch plötzlich eintretende Einflüsse oder durch langsamen Verschleiß und es können sich dann Funken bilden, durch die zündfähige Gemische gezündet und gefährliche Explosionen ausgelöst werden. Aber auch, wenn die Leitungen keinen elektrischen Strom sondern Druckmittel führen, können durch austretendes Druckmittel Personen verletzt und Gegenstände beschädigt werden. Andererseits ist es aber erforderlich, bei längs eines Gleises verfahrbaren untertätigen Hänge- oder Standbahnen Fahrzeuge, insbesondere längs der Schienen verfahrbare Arbeitsgeräte, von einer stationären Energiequelle über bewegliche Leitungen mit Energie zu versorgen, da auf den Fahrzeugen mitgeführte verfahrbare Energiequellen entweder aus Sicherheitsgründen unzulässig sind oder im Falle von Speichern über eine ausreichende Kapazität nicht verfügen.

Aufgabe der Erfindung ist es deshalb, eine Vorrichtung zum Anschluß der verfahrbaren Energieverbraucher nach dem ersten Teil des Anspruches 1 zu schaffen, die bei Verwendung bei einer Länge eines Gleises verfahrbaren untertägigen Hänge- oder Standbahn den hohen Sicherheitsanforderungen des untertägigen Bergbaus entspricht.

Diese Aufgabe wird erfindungsgemäß dadurch gelöst, daß am Gleis Leitungsträger angeordnet sind, die aus auf eine Schiene des Gleises aufsteckbaren oder anklemmbaren Tragarmen mit Auflagern für die abgewickelte Leitung bestehen.

Durch die Leitungsträger können die Leitungen von der Streckensohle entfernt verlaufen, so daß die besondere Gefahr, daß sie zwischen der Streckensohle und von auf die Leitung fallenden Gegenständen beschädigt werden könnten, ausgeschlossen ist. Infolge der Verbindung der Leitungsträger mit einer Schiene des Gleises verändern die Leitungsträger ihre Position in Bezug auf das Gleis und damit auch in Bezug auf die auf dem Gleis verfahrbaren Fahrzeuge auch dann nicht, wenn die Lage des Gleises in der Strecke sich ändert. Dies letztere ist weder bei Hängebahnen noch bei Standbahnen vermeidbar. Bei Hängebahnen ist das Gleis am Streckenausbau beweglich, z. B. an Ketten, aufgehängt und ändert seine Lage gegenüber dem Streckenausbau und damit auch der Strecke unter vielfältigen Einflüssen, bei Standbahnen wird die Lage des Gleises in Bezug auf den Streckenquerschnitt durch quellendes Liegendes ständig verändert.

Bei einer bevorzugten Ausführungsform der Vorrichtung gemäß der Erfindung ist jedes Auflager von dem unteren Schenkel eines U-förmigen Bauteils gebildet, das zur Trommel bzw. zum Gleis hin offen ist. Hierdurch wird das Aufnehmen der Leitung auf die und ihr Abnehmen von den Leitungsträgern durch einfach am Fahrzeug befestigte Vorrichtungen, beispielsweise durch den Einführungstrichter, erheblich erleichtert. Schließlich kann es zweckmäßig sein, daß am oberen Schenkel des U-förmigen Bauteiles eine die Öffnung des U verschließende und bei Vorbeifahrt der Trommel durch die Leitungsführung bzw. deren Einführungstrichter in Offenstellung schwenkbare Lasche pendelnd gelagert ist. Hierdurch wird die Leitung durch unbeabsichtigtes Herausfallen aus den Leitungsträgern geschützt.

Im folgenden wird ein in der Zeichnung dargestelltes Ausführungsbeispiel der Erfindung erläutert ; es zeigen :

Figur 1 eine Seitenansicht einer Vorrichtung zum Anschluß einer längs eines Gleises einer untertägigen Hängebahn verfahrbaren Rangierkatze an eine stationäre Energiequelle,

Figur 2 eine Stirnansicht in Richtung des Pfeils A auf den Gegenstand nach Figur 1,

Figur 3 eine Stirnansicht in Richtung des Pfeils B auf den Gegenstand nach Figur 1,

Figur 4 ein Blockschaltbild für die Steuerung der Vorrichtung nach den Figuren 1 bis 3.

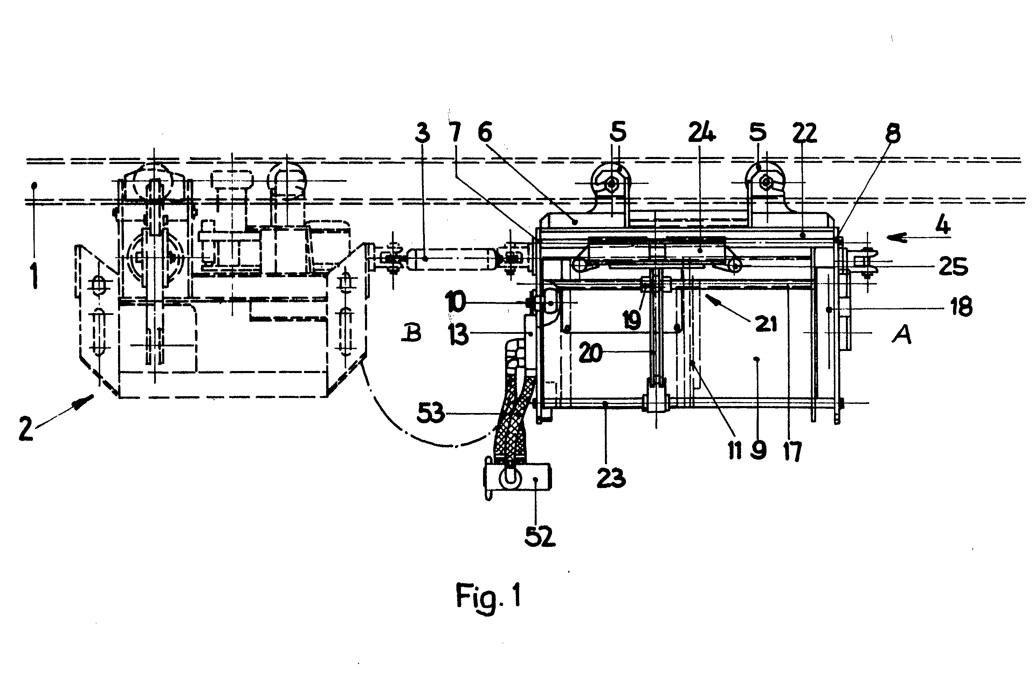

In den Figuren 1 bis 3 der Zeichnung ist eine Fahrschiene 1 einer untertägigen Hängebahn dargestellt. Längs der Fahrschiene 1 ist eine mit gestrichelten Linien angedeutete Rangierkatze 2 verfahrbar, die einen Druckluftmotor und einen Reibradantrieb besitzt. An die Rangierkatze 2 ist mit einer Kuppelstange 3 eine Vorrichtung 4 gekuppelt, über die die Rangierkatze 2 mit Druckluft versorgt wird.

Die Vorrichtung 4 besitzt ein auf Laufrädern 5 verfahrbares Gestell mit einem Längsträger 6 und an dessen Enden befestigten Seitenteilen 7, 8. Zwischen den Seitenteilen 7, 8 ist eine Trommel 9 geführt, die zumindest einseitig auf Rollen 10 des Seitenteils 7 abgestützt ist. Die Längsachse der Trommel 9 erstreckt sich in Richtung der Fahrschiene 1.

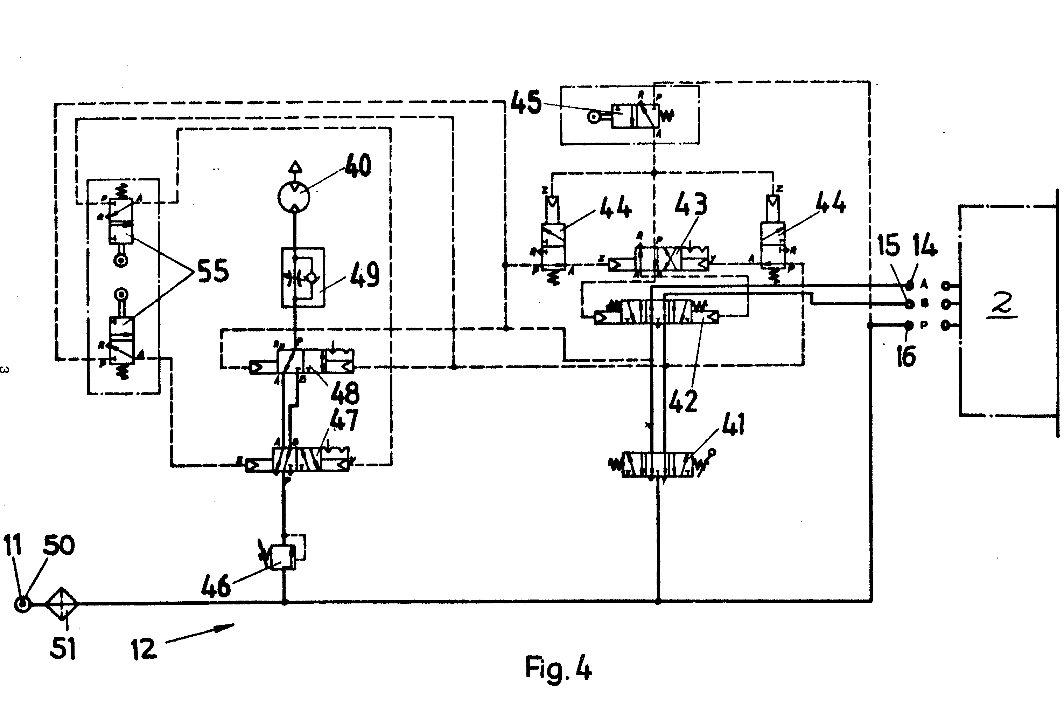

Auf die Trommel 9 ist, wie mit gestrichelten Linien angedeutet, eine druckluftführende Leitung 11 zumindest teilweise aufgewickelt. Der von der Trommel 9 abgewickelte Abschnitt der Leitung 11 ist zu einer nicht dargestellten stationären Energiequelle im Bereich der Fahrschiene 1 geführt, z. B. zu einem Druckluftanschluß, und mit dieser bzw. diesem verbunden. Das andere Ende der Leitung 11 endet im Bereich des Seitenteils 7 an der Trommel 9 und ist über eine nicht dargestellte Trommeldurchführung mit einer Steuerung 12 (Figur 4) verbunden. Die Steuerung 12 ist in einem außen an das Seitenteil 7 angeflanschten Gehäuse 13 untergebracht, das Anschlußstutzen 14, 15, 16 für nicht dargestellte Verbindungsleitungen aufweist, die ihrerseits mit entsprechenden Anschlußstutzen der Rangierkatze 2 verbunden werden können.

Parallel zur Trommelachse und neben der Trommel 9 ist an den beiden Seitenteilen 7, 8 eine drehbare Spindel 17 gelagert, deren Antrieb über ein Getriebe 18 von der Drehbewegung der Trommel 9 abgeleitet ist. Auf der Spindel 17 sitzt drehfest eine Spindelmutter 19, die an einem Antriebsarm 20 befestigt ist, der zu einer bei Spindeldrehung in Richtung der Trommelachse hin- oder herbeweglichen Leitungsführung 21 gehört. Der Antriebsarm 20 bzw. die Leitungsführung 21 sind zusätzlich noch an zwischen den Seitenteilen 7, 8 gehaltenen Stangen 22, 23 kippsicher und in Richtung der Trommellängsachse verschieblich abgestützt.

Die Leitungsführung 21 weist einen Einführungstrichter 24 auf, durch den die Leitung 11 beim Aufwickeln bzw. Abwickeln geführt wird. Der Einführungstrichter 24 erstreckt sich im wesentlichen horizontal und seine vertikalen Führungswände sind so gekrümmt, daß die Leitung 11 daran im Rahmen ihrer vorgegebenen Biegefähigkeit geführt werden kann.

Wie man der Figur 1 entnimmt, wird die Leitung 11 mit geringstmöglichem Windungsabstand auf die Trommel aufgewickelt. Dementsprechend sind die Übersetz-ungsverhältnisse der Getriebes 18 zwischen der Trommel 9 und der Spindel 7 so gewählt, daß die Leitungsführung 21 sich bei einer Trommelumdrehung gerade um einen Windungsabstand weiterbewegt hat.

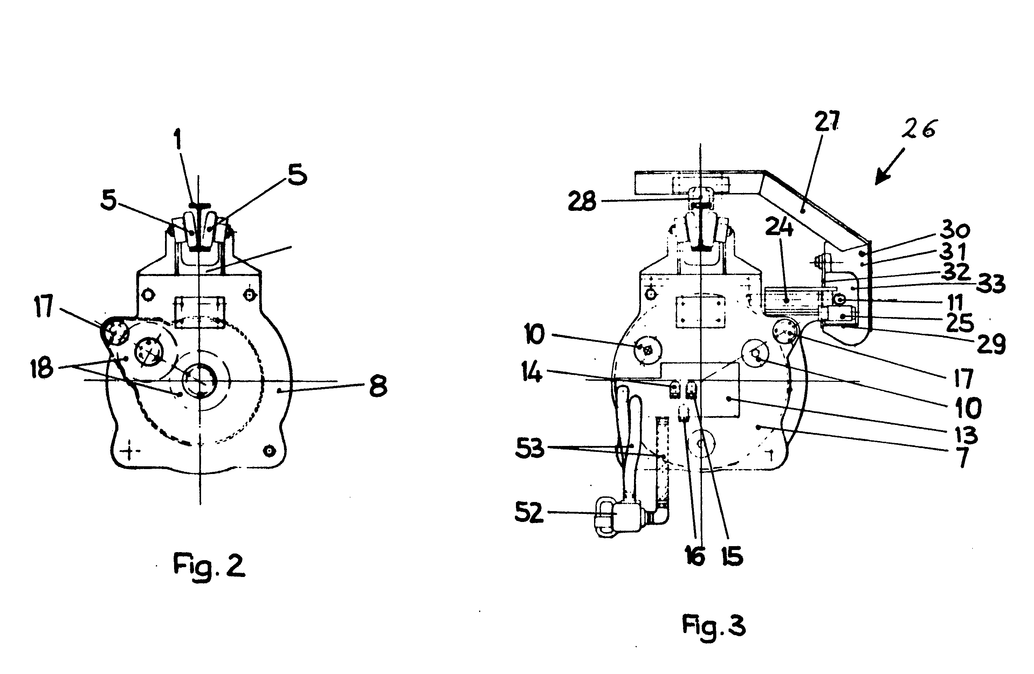

Wie man insbesondere der Figur 3 entnimmt, erstreckt sich der Einführungstrichter 24 mit an seinen Enden angeordneten horizontalen Stützrollen 25 bis in den Bereich von Leitungsträgern 26, die ausgehend von der nicht dargestellten Energiequelle in einer oder beiden Richtungen an der Fahrschiene 1 in Abständen befestigt sind. Diese Leitungsträger 26 bestehen aus Tragarmen 27, mit auf die Fahrschiene 1 aufsetzbaren Klemmen 28 und an die freien Enden der Tragarme 27 angeschlossenen Auflagern 29 für die Leitung 11. Jedes Auflager 29 wird von einem U-Schenkel eines U-förmigen Bauteils 30 gebildet, daß zur Trommel 9 bzw. zur Fahrschiene 1 hin offen ist. Am anderen U-Schenkel 31 ist eine pendelnde Lasche 32 gelagert, die um eine horizontale und zur Trommelachse senkrechte Achse schwenkbar ist. Diese Lasche 32 verschließt normalerweise aufgrund ihres Eigengewichtes die zwischen den beiden U-Schenkeln 29 und 31 gebildete Öffnung 33. Sie wird jedoch beim Durchgang des Einführungstrichters 24 der Leitungsführung 21 angehoben, so daß die Leitung 11 in die Öffnung 33 eingelegt bzw. aus dieser entnommen werden kann. Anschließend fällt die Lasche 32 wieder in ihre Ruhestellung.

Die Trommel 9 besitzt einen nur in Figur 4 sichtbaren Druckluftmotor 40 als Antrieb, der auf einer mit dem Seitenteil 8 verschweißten Konsole im Inneren der Trommel 9 angeordnet ist. Diesem Motor ist die Steuerung 12 zugeordnet.

Zur Steuerung 12 gehören ein Fahrventil 41, dessen Stellung Vorwärts- oder Rückwärtsfahrt der Rangierkatze 2 bestimmen, ein Vorsteuerventil 42, sowie ein diesem zugeordnetes Impulsventil 43, zwei weitere Impulsventile 44, Endschalter 45, 55 sowie innerhalb der Druckluftzuführung zum Druckluftmotor 40 ein Druckbegrenzungsventil 46, ein Impulsventil für die Drehrichtung des Druckluftmotors 40, ein Impulsventil 48 für die Druckluftzufuhr und ein Drosselrückschlagventil 49 unmittelbar vor dem Druckluftmotor 40. Die angegebenen Teile sind in der in Figur 4 dargestellten Weise miteinander verschaltet. Ganz allgemein sind die verschiedenen Ventilanschlüsse mit den folgenden Buchstaben gekennzeichnet : P für die Medienzufuhr ; A bzw. B für Anschlüsse von Arbeits- bzw. Funktionsleitungen, R für Anschlüsse von Abluftleitungen ; Z Anschlüsse für Steuerleitungen zur Verstellung des Ventils.

In Figur 4 erkennt man anßerdem die Leitung 11 mit der Trommeldurchführung 50, sowie einem nachgeschalteten Filter 51.

Der Endschalter 45 wird geschaltet und liefert ein Signal, wenn die Leitung 11 von der Trommel im wesentlichen abgewickelt ist. Dementsprechend kann der Endschalter 45 im Bereich des Seitenteils 7 derart angeordnet sein, daß er von einem Teil der Leitungsführung 21 betätigt wird, wenn die letzte Windung oder eine der letzten Windungen der Leitung 11 von der Trommel 9 abgewickelt wird.

Der andere Endschalter 55 liefert ein Signal bei Erschöpfung der Aufnahmefähigkeit der Trommel 9, d. h. wenn die wesentliche Länge der Leitung 11 auf der Trommel 9 gespeichert ist. Dementsprechend kann der Endschalter 55 beispielsweise im Bereich des Seitenteils 8 derart angeordnet sein, daß er von einem Teil der Leitungsführung 24 betätigt wird, wenn die letzte Windung oder eine der letzten Windungen auf die Trommel 9 aufgewickelt wird.

Im einzelnen arbeitet die dargestellte Vorrichtung 4 wie folgt : Wenn die Vorrichtung 4 sich vor der nicht dargestellten stationären Energiezufuhr befindet, ist die gesamte zur Verfügung stehende Leitungslänge auf der Trommel 9 aufgewickelt. Der Endschalter 55 liefert bei Betätigung des Fahrventils 41 ein entsprechendes Signal an die eine oder andere Seite des Impulsventils 47. Gleichzeitig wird vom Fahrventil 41 das Impulsventil 48 betätigt, das den Druckluftmotor 40 von seiner Druckluftzufuhr abschaltet, so daß die im Druckluftmotor 40 gespeicherte Druckluft nur über die Drossel des Drosselrückschlagventils 49 abfließen kann. Da vom Fahrventil 41 über den Anschlußstutzen 14 oder 15 auch ein entsprechender Steuerimpuls für den Druckluftantrieb der Rangierkatze 2 gegeben wird, setzt sich die Rangierkatze 2 in der einen oder anderen Richtung in Bewegung. Dabei wird die auf der Trommel 9 gespeicherte Leitung 11 in zunehmendem Maße von der Trommel abgewickelt. Die abgewickelte Länge der Leitung 11 wird durch den Einführungstrichter 24 bis in den Bereich der Leitungsträger 26 geführt. Da der Einführungstrichter 24 beim Passieren eines Leitungsträgers 26 dessen pendelnde Lasche 32 anhebt, kann die Leitung 11 in die Öffnung 33 eingeführt und auf dem Auflager 29 abgelegt werden. Anschließend fällt die pendelnde Lasche 32 wieder in ihre Ruhestellung und verschließt die Öffnung 33.

Gleichzeitig mit der Drehung der Trommel 9 wird auch die Leitungsführung 21 längs der Trommel 9 verschoben, und zwar soweit, bis der andere, bei abgewickelter Leitung 11 ansprechende Endschalter 45 betätigt wird. Dieser Endschalter 45 beaufschlagt einerseits die beiden Impulsventile 44, sowie das Impulsventil 43, durch dessen Verstellung auch das Vorsteuerventil 42 beaufschlagt bzw. verstellt wird. Im Ergebnis wird dadurch die Druckmittelversorgung der Rangierkatze 2 unterbrochen, die deswegen anhält und damit wird das Abreißen der Leitung 11 verhindert.

Im übrigen dienen die Impulsventile 43 und 44 dazu, eine Möglichkeit zu schaffen, über das Fahrventil 41 die Rangierkatze 2 in Gegenrichtung wieder in Betrieb zu nehmen. Deswegen ist zumindest das Fahrventil 41 in einem gesonderten Steuerkasten 52 untergebracht, das von der Vorrichtung 4 abgehängt und über Leitungen 53 mit der Steuervorrichtung 12 verbunden ist.

Wenn die Rangierkatze 2 mit der Vorrichtung 4 an der stationären Energiequelle vorbeifährt, ergibt sich eine Betriebsstellung, bei der die maximale Leitungslänge auf der Trommel 9 aufgewickelt ist. Dabei wird der Endschalter 55 betätigt, der beim dargestellten Ausführungsbeispiel zwei zu einer Gruppe zusammengefaßte Ventile aufweist, von denen je nach Stellung des Fahrventils 41 nur eines wirksam wird und das Impulsventil 47 in der einen oder anderen Richtung so beaufschlagt, daß anschließend der Druckluftmotor 40 wieder an seine Druckluftversorgung angeschlossen wird und ein Drehmoment abgibt, welches die Trommel 9 im Aufwickelsinn dreht.

Die Vorrichtung 4 stellt sicher, daß bei allen Positionen der Rangierkatze 2 bzw. der Vorrichtung 4 die druckluftführende Leitung 11 teils in den Leitungsträgern 26 gehalten und teils auf der Trommel 9 aufgewickelt ist, jedenfalls nicht auf dem Boden der Strecke liegt. Außerdem ist mit der Vorrichtung sichergestellt, daß die Rangierkatze 2 sich nur über eine solche Strecke von der stationären Energiequelle entfernen kann, die der tatsächlich zur Verfügung stehenden Leitungslänge entspricht.

**Ansprüche**

1. Vorrichtung zum Anschluß eines verfahrbaren Energieverbrauchers (2) an eine stationäre Energiequelle mittels einer an die Energiequelle angeschlossenen beweglichen Leitung (11) mit einer mit dem Energieverbraucher kuppelbaren oder an diesen angeschlossenen Trommel (9) mit einem Antrieb (40) zum Aufwickeln der Leitung (11) und einer neben der Trommel (9) gelagerten, angetriebenen Spindel (17) für eine in Trommellängsrichtung verschiebliche Leitungsführung (21) mit einem Einführungstrichter (24), wobei der Antrieb der Spindel von der Trommelbewegung abgeleitet ist, dadurch gekennzeichnet, daß bei Verwendung bei einer längs eines Gleises verfahrbaren untertägigen Hänge- oder Standbahn am Gleis (1) Leitungsträger (26) angeordnet sind, die aus auf eine Schiene des Gleises (1) aufsteckbaren oder anklemmbaren Tragarmen mit Auflagern (29) für die abgewickelt Leitung bestehen.

2. Vorrichtung nach Anspruch 1, dadurch gekennzeichnet, daß jedes Auflager (29) von dem unteren Schenkel eines U-förmigen Bauteils (30) gebildet ist, das zur Trommel bzw. zum Gleis (1) hin offen ist.

3. Vorrichtung nach Anspruch 2, dadurch gekennzeichnet, daß am oberen Schenkel des U-förmigen Bauteiles (32) eine die Öffnung (33) des U verschließende und bei Vorbeifahrt der Trommel (9) durch die Leitungsführung (21) bzw. deren Einführungstrichter (24) in Offenstellung schwenkbare Lasche (32) pendelnd gelagert ist.

**Claims**

1. An apparatus for connecting a displaceable energy consumer (2) to a stationary energy source by means of a movable line (11), connected to the energy source with a drum (9), attachable to the energy consumer or joined thereto, with a drive (40) for winding up the line (11) and a driven spindle (17) mounted next to the drum (9), for a guide (21) for the line (11), displaceable in the longitudinal direction of the drum (9), with a lead-in funnel (24), the movement of the drum being used for driving the spindle, characterized in that when used in an underground overhead or floor-mounted conveyor displaceable along a track, line carriers (26), which comprise support arms capable of being positioned or clamped on a rail of the track (1) and having supports (29) for the unwound line, are disposed on the track (1).

2. An apparatus according to Claim 1, characterized in that each support (29) is formed by the lower arm of a U-shaped component (30) which is open towards the drum or the track (1) respectively.

3. An apparatus according to Claim 2, characterized in that a cover plate (32), which closes the opening (33) of the U and which is pivotable into an open position when the drum (9) moves past through the guide (21) for the line (11) or its lead-in funnel (24), is mounted in a suspended manner on the upper arm of the U-shaped component (30).

**Revendications**

1. Dispositif de connexion d'un consommateur d'énergie déplaçable (2) à une source d'énergie stationnaire au moyen d'une canalisation (11) mobile raccordée à la source d'énergie, avec un tambour (9) accouplable ou rattaché au consommateur d'énergie, ayant un entraînement (40) pour enrouler la canalisation (11), ainsi qu'un arbre entraîné (17) monté à côté du tambour (9) pour un guide de canalisation (21) coulissable en sens longitudinal du tambour, avec un cône d'introduction (24), l'entraînement de l'arbre étant dérivé du mouvement du tambour, caractérisé en ce que, en cas d'utilisation au fond d'une mine d'une voie suspendue ou montée sur pieds, des supports de canalisation (26) consistant de bras porteurs pouvant être attachés sur ou serrés contre l'un des rails, avec des appuis (29) pour la canalisation déroulée, sont attachés au chemin de roulement (1).

2. Dispositif suivant la revendication 1, caractérisé en ce que chaque appui (29) est formé par l'aile inférieure d'un élément en forme de « U » (30) qui est ouvert par le côté orienté vers le tambour, resp. vers le chemin de roulement (1).

3. Dispositif suivant la revendication 2, caractérisé en ce qu'une plaquette de couverture (32) pendulaire est articulée à l'aile supérieure de l'élément « U » (30), obturant l'ouverture (33) de l'« U », mais pouvant être pivotée en position ouverte par le guide de canalisation (21) ou son cône d'introduction (24) lors du passage du tambour (9).

Fig. 1

0 039 506

0 039 506

Fig. 3

Fig. 2

2

0 039 506

Fig. 4